# EUROPEAN PATENT APPLICATION

(11) **EP 2 665 327 A1**
(43) Date of publication of application: **20.11.2013**
(21) Application number: 12734494.3
(22) Date of filing: 13.01.2012
(51) Int. Cl.: H04W 76/02, H04L 12/28, H04L 29/12

(54) **METHOD, SYSTEM, AND DEVICE FOR ESTABLISHING LOCAL IP ACCESS CONNECTION**

(30) Priority: 13.01.2011 CN 201110007107
(71) Applicant: Datang Mobile Communications Equipment Co., Ltd., Beijing 100083 (CN)
(72) Inventor: WANG, Hucheng, Beijing 100083 (CN)
(74) Representative: Herrmann, Uwe
(86) International application number: PCT/CN2012/070332
(87) International publication number: WO 2012/095021

(57) **Abstract**

Disclosed are a method, system, and device for establishing a local IP access (LIPA) connection, relating to the technical field of wireless communication, for use in solving the incapability of a user equipment (UE) to establish successfully the LIPA when the UE subscription information lacks therein information of a closed subscriber group (CSG) wherein the UE is established and an access point name (APN) for LIPA allowed by the CSG. In the present invention, when a UE-transmitted connection request is received by a network side, within a correlation between a preconfigured CSG identifier and an APN for public access, an APN corresponding to the identifier of the CSG wherein the UE is established is searched for, and the LIPA is established for the UE when the APN is found, or, the APN found is transmitted to the UE and the UE subscription information is modified. Employment of the present invention allows the UE to perform LIPA successfully.

## Description

The present application claims priority to Chinese Patent Application No. 201110007107.5, filed with the State Intellectual Property Office of China on January 13, 2011 and entitled "Method, system and device for establishing local IP access connection", which is hereby incorporated by reference in its entirety.

### Field of the Invention

The present invention relates to the field of wireless communications and particularly to a method, system and device for establishing a local IP access connection.

### Background of the Invention

A Local IP Access (LIPA) is a technology to allow a User Equipment (UE) for an access a local network, including a home network, an enterprise network, etc., associated with a Home (evolved) NodeB (H(e)NB) through the home NodeB. The UE particularly accesses the local network through a Local Gateway (LGW) connected with the home NodeB.

In some public places, e.g., a shopping mall, an exhibition hall, etc., a subscriber can be allowed for an connection to a local network through the access scheme of LIPA after the local network is deployed, so that the subscriber can access the local network for relevant information, e.g., prices of commodities, detailed information of exhibited items, etc., to thereby offer the convenience of and save an expense of the subscriber and also conserve a network resource, especially when the subscriber is in a roaming scenario.

At present, the network has to perform access control on an LIPA request initiated by the UE according to subscription information of the UE.

LIPA-related UE subscription information includes the following information:
Access Point Name (APN) information including one or more APNs, APNs include an LIPA-conditional APN, an LIPA-prohibited APN and an LIPA-only APN, where the LIPA-conditional APN is available to an LIPA access and a normal access, the LIPA-prohibited APN is unavailable to an LIPA access, and the LIPA-only APN is available only to an LIPA access;
Closed Subscriber Group (CSG) information including one or more CSG identifiers (IDs), where each CSG ID supporting an LIPA corresponds to at least one LIPA-only APN or LIPA-conditional APN; and
An LIPA-allowed flag of a Visited Public Land Mobile Network (VPLMN), where when the UE roams to a Public Land Mobile Network (PLMN), if the subscription information of the UE includes an LIPA-allowed flag for the PLMN, then the UE is allowed for an LIPA to the PLMN; otherwise, the UE is disallowed for an LIPA to the PLMN.

Thus the UE can be allowed for establishing an LIPA connection after the UE initiates an LIPA connection request to a PLMN only if at least the following two conditions are satisfied:
Firstly, the UE initiates the LIPA connection request through an APN which is an LIPA-conditional APN or LIPA-only APN present in the UE subscription information; and
Secondly, information of a CSG where the UE currently resides is present in CSG subscription information of the UE, and the CSG allows the UE for an LIPA through the currently active APN, that is, in the CSG information of the UE subscription information, the UE initiates the LIPA connection request through the APN which is an APN corresponding to the ID of the CSG where the UE currently resides.

In a roaming scenario, the UE can be allowed for establishing an LIPA connection only if the following condition is further satisfied that there is also an LIPA-allowed flag for the current PLMN in the subscription information of the UE.

As suggested in the 3^{rd} Generation Partnership Project (3GPP), when the UE intends to access a CSG cell in a roaming scenario, the VPLMN can support a VPLMN autonomous CSG roaming mechanism to manage the CSG subscription information of the roaming UE, so that the UE can access a CSG cell served by the VPLMN temporally without exchanging the CSG subscription information of the UE with a Home Public Land Mobile Network (HPLMN).

The inventors have identified during making of the invention the following technical problems in the prior art:
When the UE initiates an LIPA connection request to a PLMN, an LIPA connection of the UE may fail if information on a CSG where the UE currently resides and an APN allowed by the CSG for an LIPA are absent in the subscription information of the UE. For example, when a subscriber travels and goes shopping abroad, since the subscriber seldom visits this place, information on a CSG where a local shopping mall resides and an APN allowed by the CSG for an LIPA are absent in subscription information of a UE for the subscriber, and as such the subscriber can not access a local network of the shopping mall for requisite information which may exactly be the most desirable for such a subscriber.

### Summary of the Invention

Embodiments of the invention provide a method of and device for sending a connection establishment request so as to address the problem of how the network side knows that the access type requested by a PDN connection establishment request initiated by a UE is an LIPA.

A method of sending a connection establishment request includes:
determining, by a UE, a Local IP Access (LIPA) connection to be established with a current network; and
sending, by the UE, to the network side a Packet Data Network, PDN, connection establishment request carrying preconfigured information indicating the access type of the current request is an LIPA.

A device for sending a connection establishment request includes:
a determining unit configured to determine a Local IP Access (LIPA) connection to be established with a current network; and
a requesting unit configured to send to the network side a Packet Data Network (PDN) connection establishment request carrying preconfigured information indicating the access type of the current request is an LIPA.

In this solution, a UE carries, in a sent PDN connection establishment request, information indicating the access type of the current request is an LIPA so that the network side can know from the information that the access type requested by the PDN connection establishment request initiated by the UE is an LIPA.

Embodiments of the invention provide a method, system and device for establishing an LIPA connection so as to address such a problem that a UE fails to perform an LIPA when information on a CSG where the UE currently resides and an APN allowed by the CSG for an LIPA are absent in subscription information of the UE.

A method of establishing a Local IP Access (LIPA) connection includes:
receiving, by the network side, a Packet Data Network (PDN) connection establishment request, sent from a UE, carrying preconfigured information indicating the access type of the current request is an LIPA;
searching, by the network side, preconfigured correspondence relationships between Closed Subscriber Group (CSG) identifiers and Access Point Names (APNs) for a public access for an APN corresponding to the identifier of a CSG where the UE currently resides; and
establishing, by the network side, an LIPA connection for the UE through the APN after the APN is found.

A device for establishing a Local IP Access (LIPA) connection includes:
a request receiving unit configured to receive a Packet Data Network (PDN) connection establishment request, sent from a UE, carrying preconfigured information indicating the access type of the current request is an LIPA;
an APN searching unit configured to search preconfigured correspondence relationships between Closed Subscriber Group (CSG) identifiers and Access Point Names (APNs) for a public access for an APN corresponding to the identifier of a CSG where the UE currently resides; and
a connection establishing unit configured to establish an LIPA connection for the UE through the APN after the APN is found.

A radio communication system includes:
a UE configured to determine an LIPA connection to be established with a current network; and to send to the network side a Packet Data Network (PDN) connection establishment request carrying preconfigured information indicating the access type of the current request is an LIPA; and
a Mobility Management Entity (MME) configured to receive the PDN connection establishment request; to search preconfigured correspondence relationships between Closed Subscriber Group (CSG) identifiers and Access Point Names (APNs) for a public access for an APN corresponding to the identifier of a CSG where the UE currently resides; and to establish an LIPA connection for the UE through the APN after the APN is found.

In this solution, the network side receives a PDN connection establishment request, sent from a UE, carrying information indicating the currently requested access type is an LIPA and then searches preconfigured correspondence relationships between CSG identifiers and APNs for a public access for an APN corresponding to the identifier of a CSG where the UE currently resides and establishes an LIPA connection for the UE after the APN is found. As can be apparent, in this solution, CSGs in a PLMN are preconfigured with correspondence relationships between CSG IDs and APNs for a public access, and upon reception of a PDN connection establishment request, the network side establishes an LIPA connection for a UE if an APN corresponding to the identifier of a CSG where the UE currently resides can be found among the correspondence relationships, thereby achieving the purpose of enabling the UE to perform an LIPA successfully even if information of the CSG where the UE currently resides and an APN allowed by the CSG for an LIPA are absent in subscription information of the UE.

Embodiments of the invention further provide a method, system and device for establishing an LIPA connection so as to address such a problem that a UE fails to perform an LIPA when information on a CSG where the UE currently resides and an APN allowed by the CSG for an LIPA are absent in subscription information of the UE.

A method of establishing a Local IP Access (LIPA) connection includes:
receiving, by the network side, a Packet Data Network (PDN) connection establishment request, sent from a UE, carrying an Access Point Name (APN) for a public access;
determining, by the network side, establishment of an LIPA connection through the APN for a public access is allowed in a Closed Subscriber Group (CSG) where the UE resides; and
establishing, by the network side, an LIPA connection for the UE through the APN for a public access.

A device for establishing a Local IP Access (LIPA) connection includes:
a receiving unit configured to receive a Packet Data Network (PDN) connection establishment request, sent from a UE, carrying an Access Point Name (APN) for a public access; and
a connecting unit configured to determine establishment of an LIPA connection through the APN for a public access is allowed in a Closed Subscriber Group (CSG) where the UE resides and to establish an LIPA connection for the UE through the APN for a public access.

A radio communication system includes:
a UE configured to determine an LIPA connection to be established with a current network; and to send to the network side a Packet Data Network (PDN) connection establishment request carrying a preconfigured APN for a public access; and
a Mobility Management Entity (MME) configured to receive the PDN connection establishment request; and to determine establishment of an LIPA connection through the APN for a public access is allowed in a Closed Subscriber Group (CSG) where the UE resides and to establish an LIPA connection for the UE through the APN carried in the PDN connection establishment request.

In this solution, the network side receives a PDN connection establishment request, sent from a UE, carrying information of an APN for a public access and then establishes an LIPA connection for the UE without searching for an APN. As can be apparent, in this solution, an LIPA connection is established for the UE directly through the APN, thereby achieving the purpose of enabling the UE to perform an LIPA successfully even if information of the CSG where the UE currently resides and an APN allowed by the CSG for an LIPA are absent in subscription information of the UE.

Embodiments of the invention further provide a method of and device for notifying APN information so as to address the problem of how a UE knows through which APNs it can initiate an LIPA in a CSG where it currently resides.

A method of notifying Access Point Name, APN, information includes:
receiving, by the network side, an access request sent from a UE;
searching, by the network side, preconfigured correspondence relationships between Closed Subscriber Group (CSG) identifiers and APNs for a public access for an APN corresponding to the identifier of a CSG where the UE currently resides; and
adding, by the network side, to subscription information of the UE, information of the UE being enabled to perform a Local IP Access (LIPA) in the CSG through the APN after the APN is found, and sending the APN to the UE to notify the UE of being enabled to initiate an LIPA connection establishment request through the APN.

A device for notifying Access Point Name (APN) information includes:
a request receiving unit configured to receive an access request sent from a UE;
an APN searching unit configured to search preconfigured correspondence relationships between Closed Subscriber Group (CSG) identifiers and APNs for a public access for an APN corresponding to the identifier of a CSG where the UE currently resides;
a subscription information modifying unit configured to add, to subscription information of the UE, information of the UE being enabled to perform an LIPA in the CSG through the APN after the APN is found; and
an APN notifying unit configured to send the APN to the UE to notify the UE of being enabled to initiate a Local IP Access (LIPA) connection establishment request through the APN.

In this solution, the network side receives an access request sent from a UE and then searches preconfigured correspondence relationships between CSG identifiers and APNs for a public access for an APN corresponding to the identifier of a CSG where the UE currently resides and adds, to subscription information of the UE, information of the UE being enabled to perform a Local IP Access (LIPA) in the CSG through the APN after the APN is found and sends the APN to the UE to thereby enable the UE to initiate an LIPA through the notified APN.

Embodiments of the invention further provide a method, system and device for establishing an LIPA connection so as to address such a problem that a UE fails to perform an LIPA when information on a CSG where the UE currently resides and an APN allowed by the CSG for an LIPA are absent in subscription information of the UE.

A method of establishing a Local IP Access (LIPA) connection includes:
sending, by a UE, an access request to the network side;
receiving, by the UE, information of an APN for a public access sent from the network side; and
initiating, by the UE, an LIPA connection establishment request to the network side through the APN.

A device for establishing a Local IP Access (LIPA) connection includes:
a request sending unit configured to send an access request to the network side;
an APN receiving unit configured to receive information of an APN for a public access sent from the network side; and
an LIPA initiating unit configured to initiate an LIPA connection establishment request to the network side through the APN.

A radio communication system includes:
a UE configured to send an access request to the network side; and to receive information of an APN for a public access sent from the network side and to initiate an LIPA connection establishment request to the network side through the APN; and
a Mobility Management Entity, MME, configured to receive the access request sent from the UE and to search preconfigured correspondence relationships between Closed Subscriber Group (CSG) identifiers and Access Point Names (APNs) for a public access for an APN corresponding to the identifier of a CSG where the UE currently resides; and to add, to subscription information of the UE, information of the UE being enabled to perform an LIPA in the CSG through the APN after the APN is found and to send the APN to the UE to notify the UE of being enabled to initiate an LIPA connection establishment request through the APN.

In this solution, the network side receives an access request sent from a UE and then searches preconfigured correspondence relationships between CSG identifiers and APNs for a public access for an APN corresponding to the identifier of a CSG where the UE currently resides and adds, to subscription information of the UE, information of the UE being enabled to perform a Local IP Access (LIPA) in the CSG through the APN after the APN is found and sends the APN to the UE to notify the UE of being enabled to initiate an LIPA connection establishment request through the APN. Since the subscription information of the UE includes the information of the UE being enabled to perform a Local IP Access (LIPA) in the CSG through the APN, subsequently the UE can perform an LIPA through the APN notified from the network side, thereby achieving the purpose of enabling the UE to perform an LIPA successfully even if information of the CSG where the UE currently resides and an APN allowed by the CSG for an LIPA are absent in the subscription information of the UE.

### Brief Description of the Drawings

Fig. 1 is a schematic flow chart of a method according to an embodiment of the invention;

Fig. 2 is a schematic flow chart of another method according to an embodiment of the invention;

Fig. 3 is a schematic flow chart of a further method according to an embodiment of the invention;

Fig. 4 is a schematic flow chart of still another method according to an embodiment of the invention;

Fig. 5A is a schematic flow chart of a first embodiment of the invention;

Fig. 5B is a schematic flow chart of a second embodiment of the invention;

Fig. 6 is a schematic structural diagram of a system according to an embodiment of the invention;

Fig. 7 is a schematic structural diagram of a device according to an embodiment of the invention;

Fig. 8 is a schematic structural diagram of another device according to an embodiment of the invention;

Fig. 9 is a schematic structural diagram of a further device according to an embodiment of the invention;

Fig. 10 is a schematic structural diagram of still another device according to an embodiment of the invention; and

Fig. 11 is a schematic structural diagram of still a further device according to an embodiment of the invention.

### Detailed Description of the Embodiments

In order to address such a problem that a UE fails to perform an LIPA when information on a CSG where the UE currently resides and an APN allowed by the CSG for an LIPA are absent in subscription information of the UE, embodiments of the invention provide a method of sending a connection establishment request and a method of establishing an LIPA connection, and in these methods, firstly a CSG in a PLMN is preconfigured with correspondence relationships between CSG IDs and APNs for a public access, and in a Packet Data Network (PDN) connection establishment request sent to the network side, a UE carries information indicating the access type of the current request is an LIPA, and upon reception of the PDN connection establishment request, the network side searches the preconfigured correspondence relationships for an APN corresponding to the identifier of a CSG where the UE currently resides and establishes an LIPA connection for the UE if the APN is found.

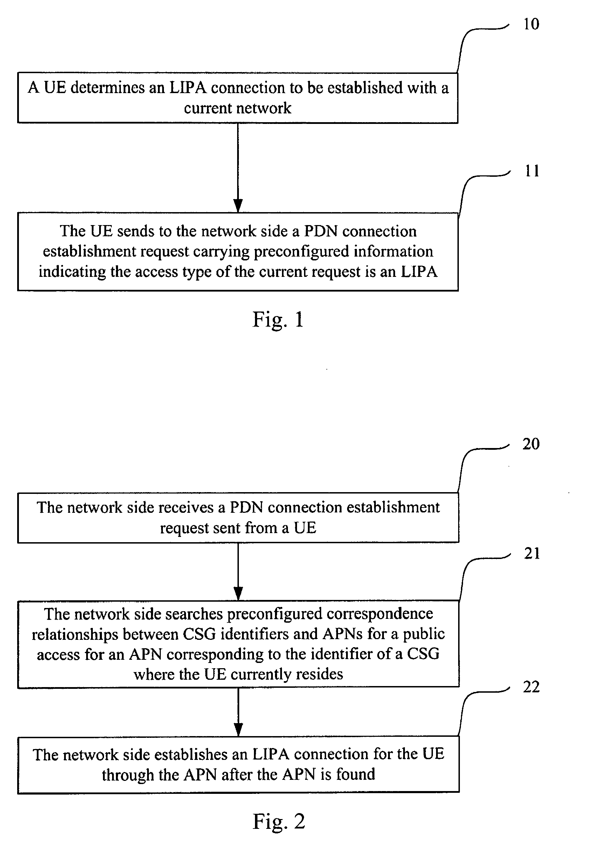

Referring to Fig. 1, a method of sending a connection establishment request according to an embodiment of the invention includes the following steps.

Step 10: A UE determines an LIPA connection to be established with a current network.

Step 11: The UE sends to the network side a PDN connection establishment request carrying preconfigured information indicating the access type of the current request is an LIPA.

The information indicating the access type of the current request is an LIPA is well-known Access Point Name (APN) or information of an LIPA request type, and the information of the LIPA request type can be carried in a Request Type field of the PDN connection establishment request.

Referring to Fig. 2, a method of establishing an LIPA connection according to an embodiment of the invention includes the following steps.

Step 20: The network side receives a PDN connection establishment request, sent from a UE, carrying preconfigured information indicating the access type of the current request is an LIPA.

Step 21: The network side searches preconfigured correspondence relationships between CSG identifiers and APNs for a public access for an APN corresponding to the identifier of a CSG where the UE currently resides.

Step 22: The network side establishes an LIPA connection for the UE through the APN after the APN is found. The network side rejects the PDN connection establishment request if the APN is not found.

Preferably, after the network side receives the PDN connection establishment request and before the network side searches the preconfigured correspondence relationships between the CSG identifiers and the APNs for a public access for the APN corresponding to the identifier of the CSG where the UE currently resides, the network side can firstly obtain subscription information of the UE and determine whether the subscription information includes information of allowing an LIPA through an APN for a public access; and if so, then the network side can search the preconfigured correspondence relationships between the CSG identifiers and the APNs for a public access for the APN corresponding to the identifier of the CSG where the UE currently resides; otherwise, the network side can reject the PDN connection establishment request of the UE.

Preferably, after the network side receives the PDN connection establishment request and before the network side searches the preconfigured correspondence relationships between the CSG identifiers and the APNs for a public access for the APN corresponding to the identifier of the CSG where the UE currently resides, if the UE currently resides in a VPLMN, then the network side can firstly obtain subscription information of the UE and determine whether the subscription information includes an LIPA-allowed flag for the VPLMN; and if so, then the network side can search the preconfigured correspondence relationships between the CSG identifiers and the APNs for a public access for the APN corresponding to the identifier of the CSG where the UE currently resides; otherwise, the network side can reject the PDN connection establishment request of the UE.

Preferably, after the network side receives the PDN connection establishment request and before the network side searches the preconfigured correspondence relationships between the CSG identifiers and the APNs for a public access for the APN corresponding to the identifier of the CSG where the UE currently resides, if the UE currently resides in a VPLMN, then the network side can firstly obtain subscription information of the UE and determine whether the subscription information includes information of allowing an LIPA through an APN for a public access and whether it includes an LIPA-allowed flag for the VPLMN; and if both are positive, then the network side can search the preconfigured correspondence relationships between the CSG identifiers and the APNs for a public access for the APN corresponding to the identifier of the CSG where the UE currently resides; otherwise, the network side can reject the PDN connection establishment request of the UE.

The correspondence relationships between the CSG identifiers and the APNs for a public access in the step 21 can be configured on a Mobility Management Entity (MME) or a Domain Name Server (DNS) of a local PLMN.

In this method, the APN for a public access can be:
a predefined well-known Access Point Name (APN) which is such an APN that can indicate the access type of the current request of the UE is an LIPA and that can be identified by all of PLMNs; or
a predefined well-defined Access Point Name (APN) which is such an APN that can distinguish an LIPA connection of a different type of service and that can be identified by a serving PLMN; or
an APN available to an LIPA as defined in the 3GPP protocol, i.e., an LIPA-conditional APN and/or an LIPA-only APN.

Particularly, the well-known APN is a predefined special APN that can be identified by all of PLMNs, and a different well-known APN can be defined for each PLMN but can be identified by other PLMNs.

Since there are a number of CSGs possible for a PLMN, for the purposes of management, billing, etc., a plurality of well-defined APNs can be defined and CSGs can be grouped so that each group corresponds to one of the well-defined APNs and a CSG in each group allows the UE for an LIPA connection through the well-defined APN corresponding to the group.

If the PDN connection establishment request sent from the UE carries an APN for a public access, then the network side can further establish an LIPA connection for the UE through the APN for a public access directly without searching for an APN after determining establishment of an LIPA connection through the APN is allowed in the Closed Subscriber Group (CSG) where the UE resides.

The network side can firstly further obtain subscription information of the UE and determine the subscription information includes an LIPA-allowed flag for a current PLMN before an LIPA connection for the UE is established through the APN for a public access.

Alike the APN for a public access can be:
a predefined well-known Access Point Name (APN) which is such an APN that can indicate the access type of the current request of the UE is an LIPA and that can be identified by all of PLMNs; or
a predefined well-defined Access Point Name (APN) which is such an APN that can distinguish an LIPA connection of a different type of service and that can be identified by a serving PLMN; or
an APN available to an LIPA as defined in the 3^{rd} Generation Partnership Project (3GPP) protocol.

In order to address such a problem that a UE fails to perform an LIPA when information on a CSG where the UE currently resides and an APN allowed by the CSG for an LIPA are absent in subscription information of the UE, embodiments of the invention provide a method of notifying APN information and a method of establishing an LIPA connection, and in these methods, firstly a CSG in a PLMN is preconfigured with correspondence relationships between CSG IDs and APNs for a public access, and upon reception of an access request from a UE, the network side searches the preconfigured correspondence relationships for an APN corresponding to the identifier of a CSG where the UE currently resides, and if the APN is found, the network side modifies subscription information of the UE so that the subscription information of the UE includes information of the UE being enabled to perform an LIPA in the CSG through the found APN, and sends the found APN to the UE to notify the UE of being enabled to initiate an LIPA connection establishment request through the APN.

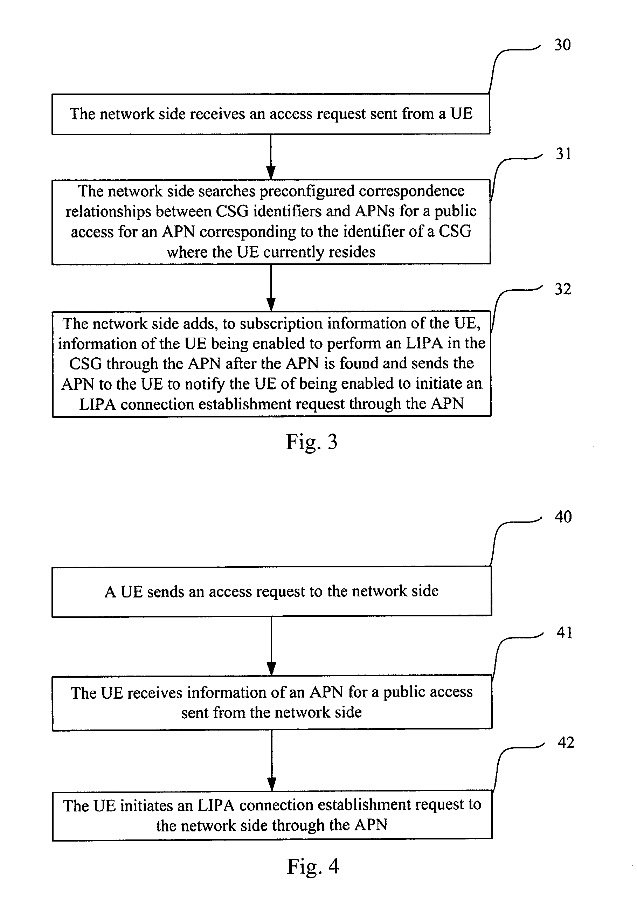

Referring to Fig. 3, a method of notifying APN information according to an embodiment of the invention includes the following steps.

Step 30: The network side receives an access request sent from a UE.

Step 31: The network side searches preconfigured correspondence relationships between CSG identifiers and APNs for a public access for an APN corresponding to the identifier of a CSG where the UE currently resides.

Step 32: The network side adds, to subscription information of the UE, information of the UE being enabled to perform an LIPA in the CSG through the APN (that is, add a correspondence relationship between the ID of the CSG and the APN to CSG information of the subscription information) after the APN is found and sends the APN to the UE to notify the UE of being enabled to initiate an LIPA connection establishment request through the APN. The network side performs a corresponding access procedure as in an existing flow if the APN is not found.

Preferably, after the network side receives the access request and before the network side searches the preconfigured correspondence relationships between the CSG identifiers and the APNs for a public access for the APN corresponding to the identifier of the CSG where the UE currently resides, if the UE currently resides in a VPLMN, then the network side can firstly obtain the subscription information of the UE and determine whether the subscription information includes an LIPA-allowed flag for the VPLMN; and if so, then the network side can search the preconfigured correspondence relationships between the CSG identifiers and the APNs for a public access for the APN corresponding to the identifier of the CSG where the UE currently resides; otherwise, the network side performs the corresponding access procedure as in the existing flow.

In the step 32, the information of being enabled to perform an LIPA in the CSG through the APN can be added to the subscription information of the UE as follows:
the network side determines whether the UE currently resides in a VPLMN, whether the VPLMN supports a VPLMN autonomous CSG roaming function and whether an HPLMN of the UE allows the VPLMN autonomous CSG roaming function; and
if all are positive, then the network side adds the information of the UE being enabled to perform an LIPA in the CSG through the APN on an entity in the VPLMN in which CSG. subscription information is stored temporally; otherwise, the network side adds the information of the UE being enabled to perform an LIPA in the CSG through the APN on a Home Subscriber Server (HSS) of the HPLMN of the UE.

The correspondence relationships between the CSG identifiers and the APNs for a public access in the step 31 are configured on an MME or a DNS of a local PLMN.

In this method, the access request is a Routing Area Update (RAU) request or a Tracking Area Update (TAU) request or an Attach request.

The APN for a public access can be:
a predefined well-known APN which is such an APN that can indicate the access type of the current request of the UE is an LIPA and that can be identified by all of PLMNs; or
a predefined well-defined APN which is such an APN that can distinguish an LIPA connection of a different type of service and that can be identified by a serving PLMN; or
an APN available to an LIPA as defined in the 3GPP protocol.

Referring to Fig. 4, a method of establishing an LIPA connection according to an embodiment of the invention includes the following steps.

Step 40: A UE sends an access request to the network side.

Step 41: The UE receives information of an APN for a public access sent from the network side.

Step 42: The UE initiates an LIPA connection establishment request to the network side through the APN.

In this method, the access request is an RAU request or a TAU request or an Attach request.

The APN for a public access can be: a predefined well-known APN which is such an APN that can indicate the access type of the current request of the UE is an LIPA and that can be identified by all of PLMNs; or a predefined well-defined APN which is such an APN that can distinguish an LIPA connection of a different type of service and that can be identified by a serving PLMN; or an APN available to an LIPA as defined in the 3GPP protocol.

The invention will be described below with connection with particular embodiments. First Method:

In this method, an LIPA is performed through a well-known APN or in a special access type.

All of PLMNs support or identify a special well-known APN (the well-known APN refers to a special APN that can be identified by all the PLMNs, and a different APN may be specified for each PLMN but can be identified by the other PLMNs, like an Emergency Number), and the use of this APN by a UE indicates that the UE intends to establish an LIPA connection, and only a UE subscribing for this APN is allowed for establishing an LIPA connection through the well-defined APN. Alternatively, the use of a special access type by a UE indicates an intension to initiate an LIPA.

Since there are at most 125 millions of CSGs for a PLMN, for the purposes of management, billing, etc., a plurality of well-defined APNs can be available and different CSGs can be grouped so that one of the well-defined APNs is available to each group of CSGs, and these APNs are allowed for only establishment of an LIPA connection.

Only if a UE subscribing for a well-known APN initiates a PDN connection request through the well-known APN or makes a PDN connection request of a special access type, and an LIPA-allowed flag for the PLMN is present in the subscription information, the UE can be determined by the network side to intend to establish an LIPA connection, and the network side can inquire a static configuration or a DNS about a well-defined APN corresponding to a CSG where the UE currently resides and establishes an LIPA connection through the well-defined APN for the UE if this APN is present; otherwise, the network side rejects establishment of an LIPA connection.

Particular steps are as follows.

A well-known APN is specified, and this APN can be identified by all of PLMNS. Alternatively, a special access type is configured as an LIPA request type.

Each PLMN is configured with a set of well-defined APNs and a CSG list is configured for each APN.

There is a subscription for the well-known APN in subscription information of a UE, and there is an LIPA-permission flag for this APN: LIPA-Only.

When the UE initiates a PDN connection request through the well-known APN or in the special access type, the network side searches by the ID of a CSG where the UE currently resides for a well-defined APN corresponding thereto.

If the well-defined APN is present, then an LIPA connection is established; otherwise, the PDN connection request is rejected.

### First Embodiment

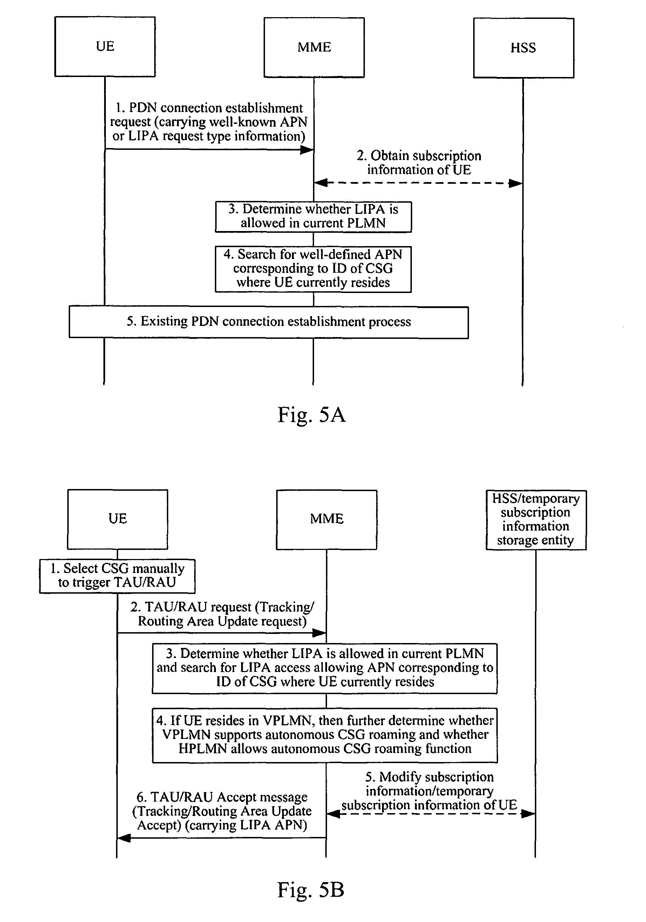

As illustrated in Fig. 5A:

Step 1: A UE sends to the network side a PDN connection establishment request which carries a well-known APN or in which a Request Type field is set to LIPA.

Step 2: An MME receives the PDN connection establishment request and obtains subscription information of the UE.

For example, the MME obtains the subscription information of the UE from an HSS in an Attach procedure.

Step 3: The MME determines from the subscription information whether the UE is allowed for initiating an LIPA connection request in a current PLMN and proceeds to the step 4 if it is allowed; otherwise, the MME rejects the connection establishment request.

Step 4: The MME inquires a static configuration or a DNS by the ID of a CSG where the UE currently resides about a well-defined APN corresponding to the ID of the CSG. The MME allows establishment of an LIPA connection if this well-defined APN is present.

Step 5: The MME performs a process of establishing a PDN connection, i.e., an LIPA PDN connection of the UE to a Local Gateway (LGW) (the address of the LGW is reported by an H(e)NB in the prior art) as in an existing flow.

### Second Method:

In this method, a temporary subscription is made.

In a roaming scenario, a demand for VPLMN autonomous CSG roaming has been proposed in SA1, so in CSG cells of a VPLMN, a UE can select a CSG cell manually, and the VPLMN determines whether an HPLMN of the UE allows a VPLMN autonomous CSG roaming function and whether subscription information of the UE includes an LIPA-allowed flag of a current PLMN, and if the subscription information of the UE includes the LIPA-allowed flag of the current PLMN, then the VPLMN inquires a static configuration or a DNS about whether an LIPA is allowed in the CSG cell where the UE enters as well as an LIPA APN corresponding to the CSG, and then the VPLMN notifies the UE of through which APN an LIPA can be performed in the CSG cell and also adds information of the LIPA APN to stored temporary CSG subscription information of the UE. When the UE establishes an LIPA connection through the APN indicated by the network side, the network side can establish an LIPA connection for the UE. If the VPLMN does not support the VPLMN autonomous CSG roaming function, then the VPLMN may add temporary subscription information of the LIPA APN and the CSG by modifying subscription information on the HPLMN.

In a non-roaming scenario, the UE can select a CSG cell manually, and the HPLMN inquires a static configuration or a DNS about whether an LIPA can be performed in the CSG cell where the UE enters as well as an LIPA APN corresponding to the CSG and notifies the UE of through which APN an LIPA can be performed in the CSG cell, and the network side adds information of the LIPA APN by modifying subscription information of the UE. When the UE establishes a PDN connection through the APN indicated by the network side, the network side can establish an LIPA connection for the UE.

Particular steps are as follows.

The network side configures correspondence relationships between CSG IDs and LIPA APNs statically locally or on a DNS.

The UE enters a CSG cell and selects a CSG manually.

The network side determines whether an LIPA is allowed to be initiated in the current PLMN, and if it is allowed, then the network side inquires the static configuration or the DNS about whether an LIPA can be performed in the CSG cell where the UE enters as well as a corresponding LIPA APN for allowing the access.

For modifying the subscription information of the UE, if the UE resides in a VPLMN which supports a VPLMN autonomous CSG roaming function and an HPLMN allows the VPLMN autonomous CSG roaming function, then related information of the LIPA APN is added on an entity where CSG subscription information is temporally stored; otherwise (including the case that the UE resides in a VPLMN but the VPLMN does not supports or the HPLMN does not allows VPLMN autonomous CSG roaming function, and the case that the UE resides in the HPLMN), the subscription information of the UE is modified on the HPLMN.

The UE is notified of being enabled to initiate an LIPA in the current CSG and of the corresponding LIPA APN. The UE can establish an LIPA connection through this APN.

### Second Embodiment:

As illustrated in Fig. 5B:

Step 1: A UE selects a CSG manually to thereby trigger a TAU/RAU procedure of the UE in the prior art.

Step 2: The UE sends a TAU/RAU Request message to the network side.

Step 3: An MME determines from subscription information of the UE whether an LIPA is allowed in the current PLMN, and if it is allowed, then the MME inquires locally or a DNS by the ID of the CSG where the UE currently resides an LIPA APN for a public access corresponding to the ID of the CSG. If it is not allowed, then the MME performs the TAU/RAU procedure as in an existing flow. And proceeds to the step 4 if the LIPA APN for a public access corresponding to the ID of the CSG is found; otherwise, the MME performs the TAU/RAU procedure as in an existing flow.

Step 4: If the current PLMN is a VPLMN, then it is determined whether the VPLMN supports a PLMN autonomous CSG roaming function and whether an HPLMN allows the PLMN autonomous CSG roaming function, and if so, then the subscription information of the UE may be modified on an entity of the VPLMN in which temporary subscription information is stored; otherwise, the subscription information of the UE may be modified on an HSS of the HPLMN.

Step 5: The MME modifies the subscription information of the UE by modifying it on the entity in which temporary subscription information is stored if the UE resides in the VPLMN or by modifying it on the HSS if the UE resides in the HPLMN.

Step 6: The LIPA APN allowing an access of the UE is returned to the UE in a TAU/RAU Accept message so that the UE can initiate an LIPA connection establishment request through the APN.

### Third Method:

In this method, an LIPA is performed through an APN for a public access.

The network side can establish an LIPA connection for a UE directly through an APN for a public access carried in a PDN connection establishment request sent from the UE.

Particular steps are as follows.

One or more APNs for a public access are specified, and the APN or APNs can be identified by all of PLMNS. Alternatively, a special access type is configured as an LIPA request type.

A UE can send a PDN connection establishment request by carrying an APN for a public access after obtaining the APN for a public access from the network side or a third party, and the network side establishes an LIPA connection for the UE directly through the APN for a public access of the UE.

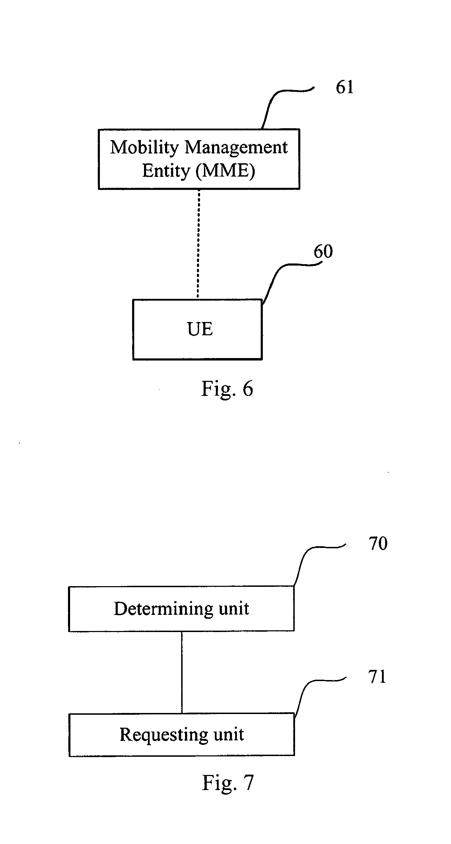

Referring to Fig. 6, an embodiment of the invention further provides a radio communication system including:
a UE 60 configured to determine an LIPA connection to be established with a current network; and to send to the network side a Packet Data Network (PDN) connection establishment request carrying preconfigured information indicating the access type of the current request is an LIPA; and
an MME 61 configured to receive the PDN connection establishment request; to search preconfigured correspondence relationships between Closed Subscriber Group (CSG) identifiers and Access Point Names (APNs) for a public access for an APN corresponding to the identifier of a CSG where the UE currently resides; and to establish an LIPA connection for the UE through the APN after the APN is found.

Referring to Fig. 7, an embodiment of the invention further provides a device for sending a connection establishment request, and the device includes:
a determining unit 70 configured to determine a Local IP Access (LIPA) connection to be established with a current network; and
a requesting unit 71 configured to send to the network side a Packet Data Network (PDN) connection establishment request carrying preconfigured information indicating the access type of the current request is an LIPA.

The information indicating the access type of the current request is an LIPA is a well-known Access Point Name (APN) or information of an LIPA request type.

The device for sending a connection establishment request according to the embodiment of the invention can be a UE.

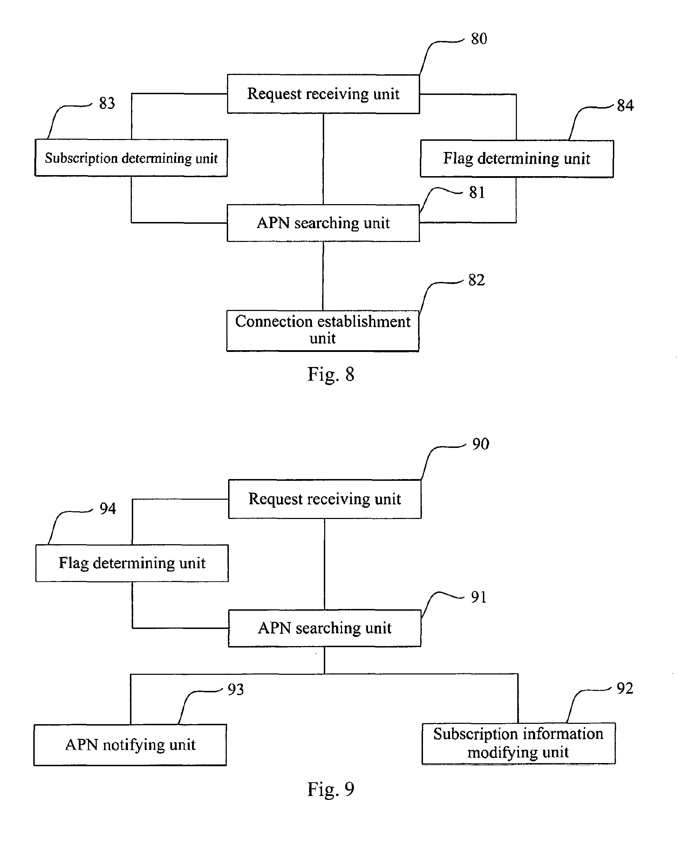

Referring to Fig. 8, an embodiment of the invention further provides a device for establishing an LIPA connection, and the device includes:
a request receiving unit 80 configured to receive a PDN connection establishment request, sent from a UE, carrying preconfigured information indicating the access type of the current request is an LIPA;
an APN searching unit 81 configured to search preconfigured correspondence relationships between CSG identifiers and Access Point Names (APNs) for a public access for an APN corresponding to the identifier of a CSG where the UE currently resides; and
a connection establishing unit 82 configured to establish an LIPA connection for the UE through the APN after the APN is found.

The device further includes:
a subscription determining unit 83 configured to obtain subscription information of the UE and to determine whether the subscription information includes information of allowing an LIPA through an APN for a public access.

The APN searching unit 81 is configured to search the preconfigured correspondence relationships between the CSG identifiers and the APNs for a public access for the APN corresponding to the identifier of the CSG where the UE currently resides after the subscription determining unit determines the subscription information includes the information of allowing an LIPA through an APN for a public access.

The device further includes:
a flag determining unit 84 configured to obtain subscription information of the UE and to determine whether the subscription information includes an LIPA-allowed flag for a Visited Public Land Mobile Network (VPLMN) when the UE currently resides in the VPLMN.

The APN searching unit 81 is configured to search the preconfigured correspondence relationships between the CSG identifiers and the APNs for a public access for the APN corresponding to the identifier of the CSG where the UE currently resides after the flag determining unit determines the subscription information includes the LIPA-allowed flag for the VPLMN.

The correspondence relationships between the CSG identifiers and the APNs for a public access are configured on a Mobility Management Entity (MME) or a Domain Name Server (DNS) of a local PLMN.

The APN for a public access is:
a predefined well-known Access Point Name (APN) which is such an APN that can indicate the access type of the current request of the UE is an LIPA and that can be identified by all of PLMNs; or
a predefined generic well-defined APN which is such an APN that can distinguish an LIPA connection of a different type of service and that can be identified by a serving PLMN; or
an APN available to an LIPA as defined in the 3GPP protocol.

The device for establishing an LIPA connection according to the embodiment of the invention can be an MME.

Still referring to Fig. 6, an embodiment of the invention further provides a radio communication system including:
a UE 60 configured to send an access request to the network side; and to receive information of an APN for a public access sent from the network side and to initiate an LIPA connection establishment request to the network side through the APN; and
an MME 61 configured to receive the access request sent from the UE and to search preconfigured correspondence relationships between CSG identifiers and APNs for a public access for an APN corresponding to the identifier of a CSG where the UE currently resides; and to add, to subscription information of the UE, information of the UE being enabled to perform an LIPA in the CSG through the APN after the APN is found and to send the APN to the UE to notify the UE of being enabled to initiate an LIPA connection establishment request through the APN.

Referring to Fig. 9, an embodiment of the invention further provides a device for notifying APN information, and the device includes:
a request receiving unit 90 configured to receive an access request sent from a UE;
an APN searching unit 91 configured to search preconfigured correspondence relationships between CSG identifiers and APNs for a public access for an APN corresponding to the identifier of a CSG where the UE currently resides;
a subscription information modifying unit 92 configured to add, to subscription information of the UE, information of the UE being enabled to perform an LIPA in the CSG through the APN after the APN is found; and
an APN notifying unit 93 configured to send the APN to the UE to notify the UE of being enabled to initiate an LIPA connection establishment request through the APN.

The device further includes:
a flag determining unit 94 configured to obtain the subscription information of the UE and to determine whether the subscription information includes an LIPA-allowed flag for a Visited Public Land Mobile Network (VPLMN) when the UE currently resides in the VPLMN.

The APN searching unit 91 is configured to search the preconfigured correspondence relationships between the CSG identifiers and the APNs for a public access for the APN corresponding to the identifier of the CSG where the UE currently resides after the flag determining unit determines the subscription information includes the LIPA-allowed flag for the VPLMN.

The correspondence relationships between the CSG identifiers and the APNs for a public access are configured on a Mobility Management Entity (MME) or a Domain Name Server (DNS) of a local PLMN.

The subscription information modifying unit 92 is configured to determine whether the UE currently resides in a VPLMN, whether the VPLMN supports a VPLMN autonomous CSG roaming function and whether an HPLMN of the UE allows the VPLMN autonomous CSG roaming function; and
If all are positive, to add the information of the UE being enabled to perform an LIPA in the CSG through the APN on an entity in the VPLMN in which CSG subscription information is stored temporally; otherwise, to add the information of the UE being enabled to perform an LIPA in the CSG through the APN on an HSS of the HPLMN of the UE.

The access request is an RAU request or a TAU request or an Attach request.

The APN for a public access is:
a predefined well-known APN which is such an APN that can indicate the access type of the current request of the UE is an LIPA and that can be identified by all of PLMNs; or
a predefined well-defined APN which is such an APN that can distinguish an LIPA connection of a different type of service and that can be identified by a serving PLMN; or
an APN available to an LIPA as defined in the 3GPP protocol.

The device for notifying APN information according to the embodiment of the invention can be an MME.

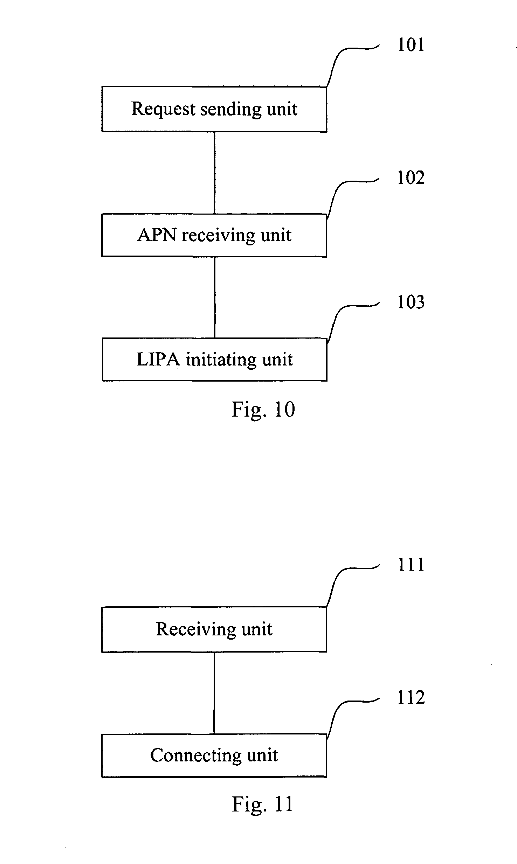

Referring to Fig. 10, an embodiment of the invention further provides a device for establishing an LIPA connection, and the device includes:
a request sending unit 101 configured to send an access request to the network side;
an APN receiving unit 102 configured to receive information of an APN for a public access sent from the network side; and
an LIPA initiating unit 103 configured to initiate an LIPA connection establishment request to the network side through the APN.

The access request is an RAU request or a TAU request or an Attach request.

The APN for a public access is:
a predefined well-known APN which is such an APN that can indicate the access type of the current request of the UE is an LIPA and that can be identified by all of PLMNs; or
a predefined well-defined APN which is such an APN that can distinguish an LIPA connection of a different type of service and that can be identified by a serving PLMN; or
an APN available to an LIPA as defined in the 3GPP protocol.

The device for establishing an LIPA connection according to the embodiment of the invention can be a UE.

Still referring to Fig. 6, an embodiment of the invention further provides a radio communication system including:
a UE 60 configured to determine an LIPA connection to be established with a current network; and to send to the network side a Packet Data Network (PDN) connection establishment request carrying a preconfigured APN for a public access; and
an MME 61 configured to receive the PDN connection establishment request; and to determine establishment of an LIPA connection through the APN for a public access is allowed in a Closed Subscriber Group (CSG) where the UE resides and to establish an LIPA connection for the UE through the APN carried in the PDN connection establishment request.

Referring to Fig. 11, an embodiment of the invention further provides a device for establishing a Local IP Access (LIPA) connection, and the device includes:
a receiving unit 111 configured to receive a Packet Data Network (PDN) connection establishment request, sent from a UE, carrying an Access Point Name (APN) for a public access; and
a connecting unit 112 configured to determine establishment of an LIPA connection through the APN for a public access is allowed in a Closed Subscriber Group (CSG) where the UE resides and to establish an LIPA connection for the UE through the APN for a public access.

The connecting unit 112 is further configured to obtain subscription information of the UE and to determine the subscription information includes an LIPA-allowed flag for a current PLMN before an LIPA connection for the UE is established through the APN for a public access.

Particularly, the APN for a public access is:
a predefined well-known Access Point Name (APN) which is such an APN that can indicate the access type of the current request of the UE is an LIPA and that can be identified by all of PLMNs; or
a predefined generic well-defined APN which is such an APN that can distinguish an LIPA connection of a different type of service and that can be identified by a serving PLMN; or
an APN available to an LIPA as defined in the 3^{rd} Generation Partnership Project (3GPP) protocol.

In summary, the invention has the following advantageous effects.

In an solution of the embodiment of the invention, a UE determines an LIPA connection to be established with a current network and then sends to the network side a PDN connection establishment request carrying preconfigured information indicating the access type of the current request is an LIPA; and the network side receives the PDN connection establishment request, sent from the UE, searches preconfigured correspondence relationships between CSG identifiers and APNs for a public access for an APN corresponding to the identifier of a CSG where the UE currently resides and establishes an LIPA connection for the UE after the APN is found. As can be apparent, in this solution, CSGs in a PLMN are preconfigured with correspondence relationships between CSG IDs and APNs for a public access, and upon reception of a PDN connection establishment request, the network side establishes an LIPA connection for a UE if an APN corresponding to the identifier of a CSG where the UE currently resides can be found among the correspondence relationships, thereby achieving the purpose of enabling the UE to perform an LIPA successfully even if information of the CSG where the UE currently resides and an APN allowed by the CSG for an LIPA are absent in the subscription information of the UE.

In an solution of the embodiment of the invention, the network side receives an access request sent from a UE and then searches preconfigured correspondence relationships between CSG identifiers and APNs for a public access for an APN corresponding to the identifier of a CSG where the UE currently resides and adds, to subscription information of the UE, information of the UE being enabled to perform a Local IP Access (LIPA) in the CSG through the APN after the APN is found and sends the APN to the UE to notify the UE of being enabled to initiate an LIPA connection establishment request through the APN. Since the subscription information of the UE includes the information of the UE being enabled to perform a Local IP Access (LIPA) in the CSG through the APN, subsequently the UE can perform an LIPA through the APN notified from the network side, thereby achieving the purpose of enabling the UE to perform an LIPA successfully even if information of the CSG where the UE currently resides and an APN allowed by the CSG for an LIPA are absent in the subscription information of the UE.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, a CD-ROM, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable data processing device provide steps for performing the functions specified in the flow(s) of the flow chart and/or the block(s) of the block diagram.

Although the preferred embodiments of the invention have been described, those skilled in the art benefiting from the underlying inventive concept can make additional modifications and variations to these embodiments. Therefore the appended claims are intended to be construed as encompassing the preferred embodiments and all the modifications and variations coming into the scope of the invention.

Evidently those skilled in the art can make various modifications and variations to the invention without departing from the scope of the invention. Thus the invention is also intended to encompass these modifications and variations thereto so long as the modifications and variations come into the scope of the claims appended to the invention and their equivalents.

## Claims

1. A method of sending a connection establishment request, comprising:
determining, by a UE, a Local IP Access, LIPA, connection to be established with a current network; and
sending, by the UE, to the network side a Packet Data Network, PDN, connection establishment request carrying preconfigured information indicating the access type of the current request is an LIPA.

2. The method according to claim 1, wherein the information indicating the access type of the current request is an LIPA is:
a well-known Access Point Name, APN, or information of an LIPA request type.

3. A method of establishing a Local IP Access, LIPA, connection, comprising:
receiving, by the network side, a Packet Data Network, PDN, connection establishment request, sent from a UE, carrying preconfigured information indicating the access type of the current request is an LIPA;
searching, by the network side, preconfigured correspondence relationships between Closed Subscriber Group, CSG, identifiers and Access Point Names, APNs, for a public access for an APN corresponding to the identifier of a CSG where the UE currently resides; and
establishing, by the network side, an LIPA connection for the UE through the APN after the APN is found.

4. The method according to claim 3, wherein after the network side receives the PDN connection establishment request and before the network side searches the preconfigured correspondence relationships between the CSG identifiers and the APNs for a public access for the APN corresponding to the identifier of the CSG where the UE currently resides, the method further comprises:
obtaining, by the network side, subscription information of the UE and determining whether the subscription information comprises information of allowing an LIPA through an APN for a public access; and
searching by the network side the preconfigured correspondence relationships between the CSG identifiers and the APNs for a public access for the APN corresponding to the identifier of the CSG where the UE currently resides comprises:
searching, by the network side, the preconfigured correspondence relationships between the CSG identifiers and the APNs for a public access for the APN corresponding to the identifier of the CSG where the UE currently resides after determining the subscription information comprises the information of allowing an LIPA through an APN for a public access.

5. The method according to claim 3, wherein after the network side receives the PDN connection establishment request and before the network side searches the preconfigured correspondence relationships between the CSG identifiers and the APNs for a public access for the APN corresponding to the identifier of the CSG where the UE currently resides, the method further comprises:
obtaining, by the network side, subscription information of the UE and determining whether the subscription information comprises an LIPA-allowed flag for a Visited Public Land Mobile Network, VPLMN, if the UE currently resides in the VPLMN; and
searching by the network side the preconfigured correspondence relationships between the CSG identifiers and the APNs for a public access for the APN corresponding to the identifier of the CSG where the UE currently resides comprises:
searching, by the network side, the preconfigured correspondence relationships between the CSG identifiers and the APNs for a public access for the APN corresponding to the identifier of the CSG where the UE currently resides after determining the subscription information comprises the LIPA-allowed flag for the VPLMN.

6. The method according to claim 3, wherein the correspondence relationships between the CSG identifiers and the APNs for a public access are configured on a Mobility Management Entity, MME, or a Domain Name Server, DNS, of a local PLMN.

7. The method according to any one of claims 3 to 6, wherein the APN for a public access is:
a predefined well-known Access Point Name, APN, which is such an APN that can indicate the access type of the current request of the UE is an LIPA and that can be identified by all of PLMNs; or
a predefined generic well-defined APN which is such an APN that can distinguish an LIPA connection of a different type of service and that can be identified by a serving PLMN; or
an APN available to an LIPA as defined in the 3^{rd} Generation Partnership Project, 3GPP, protocol.

8. The method according to any one of claims 3 to 6, wherein after the APN is not found by the network side, the method further comprises:
rejecting, by the network side, the PDN connection establishment request.

9. A method of establishing a Local IP Access, LIPA, connection, comprising:
receiving, by the network side, a Packet Data Network, PDN, connection establishment request, sent from a UE, carrying an Access Point Name, APN, for a public access;
determining, by the network side, establishment of an LIPA connection through the APN for a public access is allowed in a Closed Subscriber Group, CSG, where the UE resides; and
establishing, by the network side, an LIPA connection for the UE through the APN for a public access.

10. The method according to claim 9, wherein before the network side establishes an LIPA connection for the UE through the APN for a public access, the method further comprises:
obtaining, by the network side, subscription information of the UE and determining the subscription information comprises an LIPA-allowed flag for a current PLMN.

11. The method according to claim 9 or 10, wherein the APN for a public access is:
a predefined well-known Access Point Name, APN, which is such an APN that can indicate the access type of the current request of the UE is an LIPA and that can be identified by all of PLMNs; or
a predefined generic well-defined APN which is such an APN that can distinguish an LIPA connection of a different type of service and that can be identified by a serving PLMN; or
an APN available to an LIPA as defined in the 3^{rd} Generation Partnership Project, 3GPP, protocol.

12. A method of notifying Access Point Name, APN, information, comprising:
receiving, by the network side, an access request sent from a UE;
searching, by the network side, preconfigured correspondence relationships between Closed Subscriber Group, CSG, identifiers and APNs for a public access for an APN corresponding to the identifier of a CSG where the UE currently resides; and
adding, by the network side, to subscription information of the UE, information of the UE being enabled to perform a Local IP Access, LIPA, in the CSG through the APN after the APN is found, and sending the APN to the UE to notify the UE of being enabled to initiate an LIPA connection establishment request through the APN.

13. The method according to claim 12, wherein after the network side receives the access request and before the network side searches the preconfigured correspondence relationships between the CSG identifiers and the APNs for a public access for the APN corresponding to the identifier of the CSG where the UE currently resides, the method further comprises:
obtaining, by the network side, the subscription information of the UE and determining whether the subscription information comprises an LIPA-allowed flag for a Visited Public Land Mobile Network, VPLMN, if the UE currently resides in the VPLMN; and
searching by the network side the preconfigured correspondence relationships between the CSG identifiers and the APNs for a public access for the APN corresponding to the identifier of the CSG where the UE currently resides comprises:
searching, by the network side, the preconfigured correspondence relationships between the CSG identifiers and the APNs for a public access for the APN corresponding to the identifier of the CSG where the UE currently resides after determining the subscription information comprises the LIPA-allowed flag for the VPLMN.

14. The method according to claim 12, wherein adding, to the subscription information of the UE, the information of being enabled to perform an LIPA in the CSG through the APN comprises:
determining, by the network side, whether the UE currently resides in a Visited Public Land Mobile Network, VPLMN, whether the VPLMN supports a Visited Public Land Mobile Network, VPLMN, autonomous Closed Subscriber Group, CSG, roaming function and whether a Home Public Land Mobile Network, HPLMN, of the UE allows the VPLMN autonomous CSG roaming function; and
if all are positive, then adding, by the network side, the information of the UE being enabled to perform an LIPA in the CSG through the APN on an entity in the VPLMN in which CSG subscription information is stored temporally; otherwise, adding the information of the UE being enabled to perform an LIPA in the CSG through the APN on a Home Subscriber Server, HSS, of the HPLMN of the UE.

15. The method according to claim 12, wherein the correspondence relationships between the CSG identifiers and the APNs for a public access are configured on a Mobility Management Entity, MME, or a Domain Name Server, DNS, of a local PLMN.

16. The method according to any one of claims 12 to 15, wherein the access request is a Routing Area Update, RAU, request or a Tracking Area Update, TAU, request or an Attach request.

17. The method according to any one of claims 12 to 15, wherein the APN for a public access is:
a predefined well-known Access Point Name, APN, which is such an APN that can indicate the access type of the current request of the UE is an LIPA and that can be identified by all of PLMNs; or
a predefined generic well-defined APN which is such an APN that can distinguish an LIPA connection of a different type of service and that can be identified by a serving PLMN; or
an APN available to an LIPA as defined in the 3^{rd} Generation Partnership Project, 3GPP, protocol.

18. A method of establishing a Local IP Access, LIPA, connection, comprising:
sending, by a UE, an access request to the network side;
receiving, by the UE, information of an APN for a public access sent from the network side; and
initiating, by the UE, an LIPA connection establishment request to the network side through the APN.

19. The method according to claim 18, wherein the access request is:
a Routing Area Update, RAU, request or a Tracking Area Update, TAU, request or an Attach request.

20. The method according to claim 18 or 19, wherein the APN for a public access is:
a predefined well-known Access Point Name, APN, which is such an APN that can indicate the access type of the current request of the UE is an LIPA and that can be identified by all of PLMNs; or
a predefined generic well-defined APN which is such an APN that can distinguish an LIPA connection of a different type of service and that can be identified by a serving PLMN; or
an APN available to an LIPA as defined in the 3^{rd} Generation Partnership Project, 3GPP, protocol.

21. A device for sending a connection establishment request, comprising:
a determining unit configured to determine a Local IP Access, LIPA, connection to be established with a current network; and
a requesting unit configured to send to the network side a Packet Data Network, PDN, connection establishment request carrying preconfigured information indicating the access type of the current request is an LIPA.

22. The device according to claim 21, wherein the information indicating the access type of the current request is an LIPA is:
a well-known Access Point Name, APN, or information of an LIPA request type.

23. A device for establishing a Local IP Access, LIPA, connection, comprising:
a request receiving unit configured to receive a Packet Data Network, PDN, connection establishment request, sent from a UE, carrying preconfigured information indicating the access type of the current request is an LIPA;
an APN searching unit configured to search preconfigured correspondence relationships between Closed Subscriber Group, CSG, identifiers and Access Point Names, APNs, for a public access for an APN corresponding to the identifier of a CSG where the UE currently resides; and
a connection establishing unit configured to establish an LIPA connection for the UE through the APN after the APN is found.

24. The device according to claim 23, wherein the device further comprises:
a subscription determining unit configured to obtain subscription information of the UE and to determine whether the subscription information comprises information of allowing an LIPA through an APN for a public access; and
the APN searching unit is configured:
to search the preconfigured correspondence relationships between the CSG identifiers and the APNs for a public access for the APN corresponding to the identifier of the CSG where the UE currently resides after the subscription determining unit determines the subscription information comprises the information of allowing an LIPA through an APN for a public access.

25. The device according to claim 23, wherein the device further comprises:
a flag determining unit configured to obtain subscription information of the UE and to determine whether the subscription information comprises an LIPA-allowed flag for a Visited Public Land Mobile Network, VPLMN, when the UE currently resides in the VPLMN; and
the APN searching unit is configured:
to search the preconfigured correspondence relationships between the CSG identifiers and the APNs for a public access for the APN corresponding to the identifier of the CSG where the UE currently resides after the flag determining unit determines the subscription information comprises the LIPA-allowed flag for the VPLMN.

26. The device according to claim 23, wherein the correspondence relationships between the CSG identifiers and the APNs for a public access are configured on a Mobility Management Entity, MME, or a Domain Name Server, DNS, of a local PLMN.

27. The device according to any one of claims 23 to 26, wherein the APN for a public access is:
a predefined well-known Access Point Name, APN, which is such an APN that can indicate the access type of the current request of the UE is an LIPA and that can be identified by all of PLMNs; or
a predefined generic well-defined Access Point Name, APN, which is such an APN that can distinguish an LIPA connection of a different type of service and that can be identified by a serving PLMN; or
an APN available to an LIPA as defined in the 3^{rd} Generation Partnership Project, 3GPP, protocol.

28. A device for establishing a Local IP Access, LIPA, connection, comprising:
a receiving unit configured to receive a Packet Data Network, PDN, connection establishment request, sent from a UE, carrying an Access Point Name, APN, for a public access; and
a connecting unit configured to determine establishment of an LIPA connection through the APN for a public access is allowed in a Closed Subscriber Group, CSG, where the UE resides and to establish an LIPA connection for the UE through the APN for a public access.

29. The device according to claim 28, wherein the connecting unit is further configured:
to obtain subscription information of the UE and to determine the subscription information comprises an LIPA-allowed flag for a current PLMN before an LIPA connection for the UE is established through the APN for a public access.

30. The method according to claim 28 or 29, wherein the APN for a public access is:
a predefined well-known Access Point Name, APN, which is such an APN that can indicate the access type of the current request of the UE is an LIPA and that can be identified by all of PLMNs; or
a predefined generic well-defined Access Point Name, APN, which is such an APN that can distinguish an LIPA connection of a different type of service and that can be identified by a serving PLMN; or
an APN available to an LIPA as defined in the 3^{rd} Generation Partnership Project, 3GPP, protocol.

31. A device for notifying Access Point Name, APN, information, comprising:
a request receiving unit configured to receive an access request sent from a UE;
an APN searching unit configured to search preconfigured correspondence relationships between Closed Subscriber Group, CSG, identifiers and APNs for a public access for an APN corresponding to the identifier of a CSG where the UE currently resides;
a subscription information modifying unit configured to add, to subscription information of the UE, information of the UE being enabled to perform an LIPA in the CSG through the APN after the APN is found; and
an APN notifying unit configured to send the APN to the UE to notify the UE of being enabled to initiate a Local IP Access, LIPA, connection establishment request through the APN.

32. The device according to claim 31, wherein the device further comprises:
a flag determining unit configured to obtain the subscription information of the UE and to determine whether the subscription information comprises an LIPA-allowed flag for a Visited Public Land Mobile Network, VPLMN, when the UE currently resides in the VPLMN; and
the APN searching unit is configured:
to search the preconfigured correspondence relationships between the CSG identifiers and the APNs for a public access for the APN corresponding to the identifier of the CSG where the UE currently resides after the flag determining unit determines the subscription information comprises the LIPA-allowed flag for the VPLMN.

33. The device according to claim 31, wherein the correspondence relationships between the CSG identifiers and the APNs for a public access are configured on a Mobility Management Entity, MME, or a Domain Name Server, DNS, of a local PLMN.

34. The device according to claim 31, wherein the subscription information modifying unit is configured:
to determine whether the UE currently resides in a Visited Public Land Mobile Network, VPLMN, whether the VPLMN supports a Visited Public Land Mobile Network, VPLMN, autonomous Closed Subscriber Group, CSG, roaming function and whether a Home Public Land Mobile Network, HPLMN, of the UE allows the VPLMN autonomous CSG roaming function; and
if all are positive, to add the information of the UE being enabled to perform an LIPA in the CSG through the APN on an entity in the VPLMN in which CSG subscription information is stored temporally; otherwise, to add the information of the UE being enabled to perform an LIPA in the CSG through the APN on a Home Subscriber Server, HSS, of the HPLMN of the UE.

35. The device according to any one of claims 31 to 34, wherein the access request is a Routing Area Update, RAU, request or a Tracking Area Update, TAU, request or an Attach request.

36. The device according to any one of claims 31 to 34, wherein the APN for a public access is:
a predefined well-known Access Point Name, APN, which is such an APN that can indicate the access type of the current request of the UE is an LIPA and that can be identified by all of PLMNs; or
a predefined generic well-defined Access Point Name, APN, which is such an APN that can distinguish an LIPA connection of a different type of service and that can be identified by a serving PLMN; or
an APN available to an LIPA as defined in the 3^{rd} Generation Partnership Project, 3GPP, protocol.

37. A device for establishing a Local IP Access, LIPA, connection, comprising:
a request sending unit configured to send an access request to the network side;
an APN receiving unit configured to receive information of an APN for a public access sent from the network side; and
an LIPA initiating unit configured to initiate an LIPA connection establishment request to the network side through the APN.

38. The device according to claim 37, wherein the access request is:
a Routing Area Update, RAU, request or a Tracking Area Update, TAU, request or an Attach request.

39. The device according to claim 37 or 38, wherein the APN for a public access is:
a predefined well-known Access Point Name, APN, which is such an APN that can indicate the access type of the current request of the UE is an LIPA and that can be identified by all of PLMNs; or
a predefmed generic well-defined Access Point Name, APN, which is such an APN that can distinguish an LIPA connection of a different type of service and that can be identified by a serving PLMN; or
an APN available to an LIPA as defined in the 3^{rd} Generation Partnership Project, 3GPP, protocol.

40. A radio communication system, comprising:
a UE configured to determine an LIPA connection to be established with a current network; and to send to the network side a Packet Data Network, PDN, connection establishment request carrying preconfigured information indicating the access type of the current request is an LIPA; and
a Mobility Management Entity, MME, configured to receive the PDN connection establishment request; to search preconfigured correspondence relationships between Closed Subscriber Group, CSG, identifiers and Access Point Names, APNs, for a public access for an APN corresponding to the identifier of a CSG where the UE currently resides; and to establish an LIPA connection for the UE through the APN after the APN is found.

41. A radio communication system, comprising:
a UE configured to determine an LIPA connection to be established with a current network; and to send to the network side a Packet Data Network, PDN, connection establishment request carrying a preconfigured APN for a public access; and
a Mobility Management Entity, MME, configured to receive the PDN connection establishment request; and to determine establishment of an LIPA connection through the APN for a public access is allowed in a Closed Subscriber Group, CSG, where the UE resides and to establish an LIPA connection for the UE through the APN carried in the PDN connection establishment request.

42. A radio communication system, comprising:
a UE configured to send an access request to the network side; and to receive information of an APN for a public access sent from the network side and to initiate an LIPA connection establishment request to the network side through the APN; and
a Mobility Management Entity, MME, configured to receive the access request sent from the UE and to search preconfigured correspondence relationships between Closed Subscriber Group, CSG, identifiers and Access Point Names, APNs, for a public access for an APN corresponding to the identifier of a CSG where the UE currently resides; and to add, to subscription information of the UE, information of the UE being enabled to perform an LIPA in the CSG through the APN after the APN is found and to send the APN to the UE to notify the UE of being enabled to initiate an LIPA connection establishment request through the APN.
